# EUROPEAN PATENT SPECIFICATION

(11) **EP 2 711 485 B1**
(45) Date of publication and mention of the grant of the patent: **21.06.2017**
(21) Application number: 13185254.3
(22) Date of filing: 20.09.2013
(51) Int. Cl.: E04H 12/10, E04H 12/20, F03D 13/20

(54) **Hybrid tower structure and method for building the same**
Hybridturmstruktur und Bauverfahren dafür
Structure de tour hybride et procédé pour sa construction

(30) Priority: 21.09.2012 FI 20125978
(43) Date of publication of application: 26.03.2014
(73) Proprietor: Eurostal OY, 15170 Lahti (FI)
(72) Inventor: Nummi, Jukka, 15900 Lahti (FI); Kuusi, Tuomo, 04620 Mäntsälä (FI)
(74) Representative: Berggren Oy, Helsinki & Oulu

(56) References cited:
- EP-A2- 1 882 853
- WO-A2-2012/024608
- DE-A1- 10 309 825
- DE-A1-102004 020 480
- GB-A- 2 476 051
- US-A1- 2012 023 860
- US-A1- 2012 139 253
- US-B1- 6 745 539

## Description

The present invention relates to a hybrid tower structure and to a method for building such a hybrid tower arrangement. More precisely the invention relates to a hybrid tower structure, where the lower portion of the tower structure is formed as a lattice structure.

Hybrid tower structures and constructions are generally used in wind turbine towers. Examples of these hybrid tower structures for wind turbines comprise concrete-steel hybrids, lattice-conic hybrids and covered lattice hybrids. In concrete-steel hybrids the lower portion of the tower structure is formed from concrete and the upper portion of the tower is generally tubular steel structure. In lattice-conic hybrids the lower portion of the tower is formed as a lattice structure and the upper portion of the tower is generally tubular steel structure. In covered lattice structure the inner portion of the tower is formed as a lattice structure and covered with metal plating, for example.

In these hybrid wind turbine towers, the length of the upper portion of the tower structure is generally based on the length of the blades of the wind turbine so that the end of the blade at its lowest position will be in the area of the upper portion of the tower structure. Thus the height of the lower portion of the hybrid wind tower is generally based on the desired height of the whole wind turbine tower structure. And generally higher wind turbine tower structures are preferred, within reasonable costs of course, since the winds are generally stronger at higher altitudes.

Known lattice-conic tower structures for wind turbines are disclosed in publications WO 2012/024608 and DE 10 2004 020 480, for example. It is also known to provide towers of wind turbines with stay cables. Document EP 1882853 A2 discloses a tower for a wind turbine. The tower is provided with anchor lines and the tension of the anchor lines is increased automatically during high winds.

In the present invention a hybrid tower structure comprises a lower portion in form of a lattice structure and an upper portion with continuous outer surface, and an adapter construction between the lower and upper portions, which adapter construction connects the lower and upper portions of the tower structure. Plurality of stay cables are connected to the tower structure to provide support for the tower structure. The stay cables are equipped with means for adjusting the tension of the cables for obtaining specific frequencies for the tower structure. The lower portion of the tower structure has a hollow cross-section through its length where the load bearing lattice structure extends only on the circumference of the cross section, and the lattice structure is formed from hollow steel profiles. The lower portion of the tower structure is formed from pre-fabricated sections.

The use of stay cables in the hybrid tower structure allows adjusting of the specific frequency of the tower structure by adjusting the tension in the stay cables. Preferable at least three stay cables, or pairs of stay cables, are connected to the adapter construction of the tower structure, and each of the stay cables are fixed in a separate fixing base from their exterior or outer ends, each of the fixing bases being separate from each other and from the base of the lower portion of the tower structure. The stay cables and their separate fixing bases also allow use of a smaller and lighter base for the lower portion of the tower structure than in the prior art constructions and solutions. By using pre-fabricated lattice sections, the actual building or erecting phase of the tower construction can be speeded up.

The lattice structure of the lower portion of the tower structure is in the present invention formed so that the lattice structure extends only on the circumference of the cross section of the lower portion. Thus the center area within the lower portion of the tower structure is free to be used for other purposes. The free center area provides room for different types of equipment, provides free and safer passage from the top of the tower structure or at least from top of the lower portion, and prevents vandalism, for example.

In the present invention the lattice structure of the lower portion of the tower structure is formed from hollow steel profiles. The hollow steel profiles provide better load bearing capacity compared to elongated flat steel bars, steel L-profiles or combined steel L-profiles used in prior art lattice structures, and thus allows the free inner space inside the lower portion of the tower structure.

The stay cables are advantageously connected detachably to the adapter construction of the tower structure, through bolted connections for example. Thus there is no need for welding or other complicated fixing operations during building and/or erecting the tower structure. Further, the connection points of the stay cables in the adapter construction are advantageously substantially evenly spaced around the circumference of the adapter construction, and located substantially in the same horizontal plane.

Preferable the hollow steel profiles forming the lattice structure are made from corrosion-resistant steel. Use of the corrosion-resistant steel as a material of the lattice profiles also removes the need for coating the surfaces of lattice structure with suitable protective material, especially for the surfaces inside the hollow steel profiles.

The upper portion of the tower structure according to the invention comprises continuous outer surface and is advantageously made of steel, and is in a form of a hollow truncated cone. The upper portion can be single piece or it can be manufactured from separate sections or parts connected to each other to form single tubular entity. This type of upper portion provides similar type of appearance than the known tubular type tower structures have, since the upper portion of the tower structure is the portion of the tower seen from further away. This type of upper portion also allows smaller outer dimensions of the upper portion and is suitable for the present power generation solutions.

The cross section of the lower portion of the tower structure according to the invention has advantageously three or more corners. This type of angular cross-section allows use of corner beams extending upwards along the length of the lower portion of the tower structure, which corner beams provide support and fixing points for the lattice structure extending between adjacent corner beams.

Further, the pre-fabricated lattice sections are advantageously connected to other lattice sections through bolted joints, or with other suitable detachable connections, such as with lock nuts, with rivets, etc. This way the connecting of the prefabricated lattice sections can be carried out quickly and easily and without need for hot work, such as welding. The jointed connections also make the dismantling of the tower structure relatively fast and easy.

Advantageously the tower structure of the present invention is a tower structure for wind turbine. Other suitable applications for a tower structure according to the present invention include different types of industrial smart structures, power transmission line supports, telecommunication towers and masts, antenna constructions, and crane frames, for example.

In the method for building a hybrid tower structure according to the present invention first a base for the tower structure is formed, on which base formed and fixed a lattice structure forming a lower portion of the tower structure. The lattice structure is formed from prefabricated level lattice modules by connecting the prefabricated level lattice modules in the building site to adjacent lattice modules to form a closed angular lattice section. Once the lattice section is complete, the first lattice section is lifted and fixed on the base. Then another lattice section is formed from prefabricated lattice modules and lifted and fixed on top of the first lattice section located on the base. This process is continued until sufficient amount of lattice structures are piled and fixed on top of each other to reach the predetermined height of the lower portion of the tower structure. Then an adapter construction and a tubular upper portion are lifted and or built on top of the lower portion of the tower structure for completing the tower structure. A plurality of stay cables are connected to the tower structure for obtaining specific frequencies for the tower structure.

In the method according to present invention advantageously plurality of pairs of connected prefabricated lattice modules are formed by connecting two adjacent lattice modules to each other in an angle when the lattice modules are lengthwise in horizontal orientation, lifting the pairs of connected lattice modules lengthwise to vertical orientation, and connecting the adjacent pairs of connected lattice modules to form the closed angular lattice section. The closed angular lattice section is advantageously formed from three such pairs of connected lattice modules.

Advantageously in the methods plurality of stay cables are connected from one end detachably to the adapter construction and from other end to separate fixing bases, and the tension of the stay cables is adjusted.

The connecting of the lattice modules in the method is advantageously done through bolted joints, or through with other suitable detachable connections.

The method according to the present invention provides a fast, and thus a cost-efficient, method for building the tower structure.

The features defining a hybrid tower structure according to the present invention are presented more precisely in claim 1, and the features defining a method for building a hybrid tower structure according to the present invention are presented more precisely in claim 8.

Exemplifying embodiment of the invention and its advantages are explained in greater detail below in the sense of example and with reference to accompanying drawings, where:
Figure 1 shows schematically a tower structure according to an embodiment of the invention,
Figure 2 shows side view of the lattice structure forming the lower portion of the tower structure of figure 1,
Figure 3 show top view of the tower structure of figure 1, and
Figure 4 shows schematically part of steps in a method according to an embodiment of the invention.

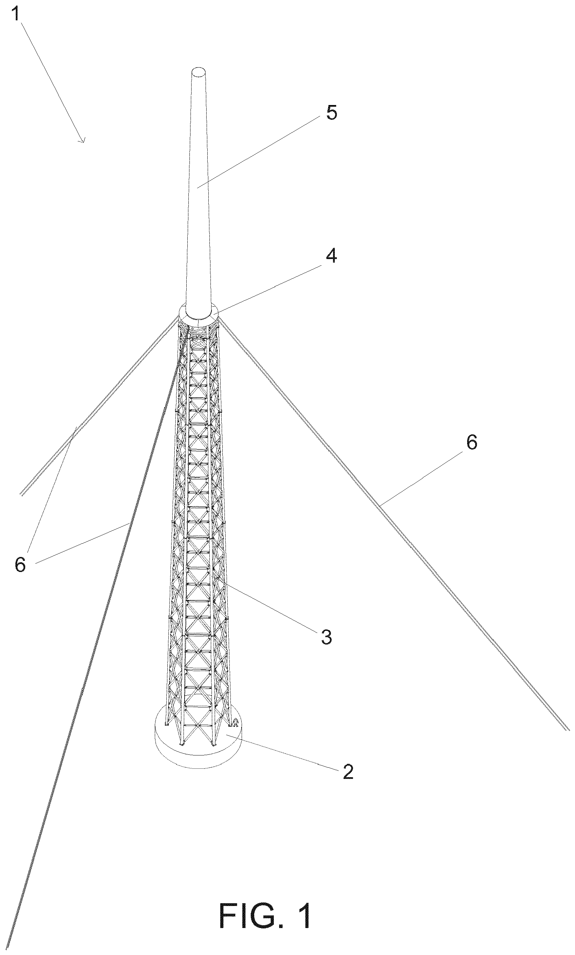

The tower structure 1 according to an embodiment of the invention shown in figure 1 comprises a tower base 2, a lower portion 3, an adapter construction 4, an upper portion 5, and stay cables 6. The tower structure 1 of the embodiment of figure 1 is for a wind turbine.

The tower base 2 is usually formed from reinforced concrete prior to the actual building or erecting of the tower structure to predefined location. The tower base 2 carries the weight of the tower structure and thus needs to be designed accordingly.

The lower portion 3 of the tower structure 1 is formed as a lattice structure. The lower portion 3 is built or erected on the tower base 2 and fixed on it.

The adapter construction 4 is fixed on top of the lower portion 3 of the tower structure 1. The adapter construction 4 covers the upper end of the lower portion 3 and provides fixing base for the upper portion 5 having smaller diameter at its lower end than what the diameter of the upper end of the lower portion is.

The stay cables 6 are connected from their upper ends to the adapter structure 1, and from their lower, exterior ends to own fixing basis (not shown), which fixing bases are separate from the tower base 2 and located at suitable distances from the tower base. In the embodiment of figure 1 there are three pairs of stay cables 3, which pairs are connected to the adapter construction 4 at equal distances around the circumference of the adapter construction. The stay cables 6 are also connected to the adapter construction 4 through bolted joints, or with other suitable detachable means. The stay cables 6 are equipped with suitable means for adjusting the tension of the wires, which can be used to adjust the stiffness of the tower structure 1 that makes it possible to obtain desired specific frequencies for the tower structure.

The upper portion 5 of the tower structure 1 is fixed on top of the adapter construction 4. The upper portion 5 is in this embodiment a single tubular steel part.

On top of the upper portion 5 of the tower structure 1 is in this embodiment of the invention attached a wind turbine (not shown) together with required gear stages and a generator, for example.

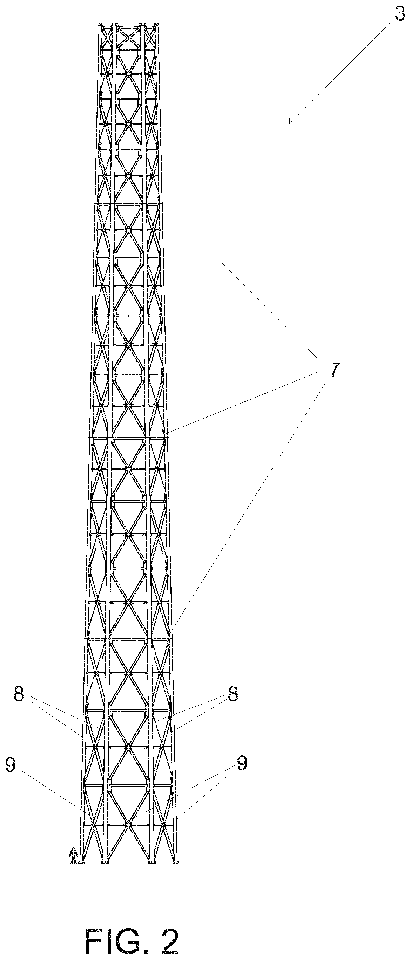

Figure 2 shows more closely the lower portion 3 of the tower structure 1 of figure 1, which lower portion is divided to four lattice sections by connecting points or planes 7.

Each lattice section of the lower portion 3 of the tower structure comprises six corner beams 8, which corner beams extend substantially vertically along the length of the lattice section at the corners of the lattice sections. The lattice sections are connected by connecting the corner beams 8 of subsequent lattice sections to form the lower portion of the tower structure.

The adjacent corner beams 8 are connected by lattice structures 9, which consist of a plurality interconnected hollow corrosion-resistant steel profiles. The corner beams 8, which are also hollow corrosion-resistant steel profiles, are provided with flanges through which flanges the lattice structures 9 can be connected with bolted joints.

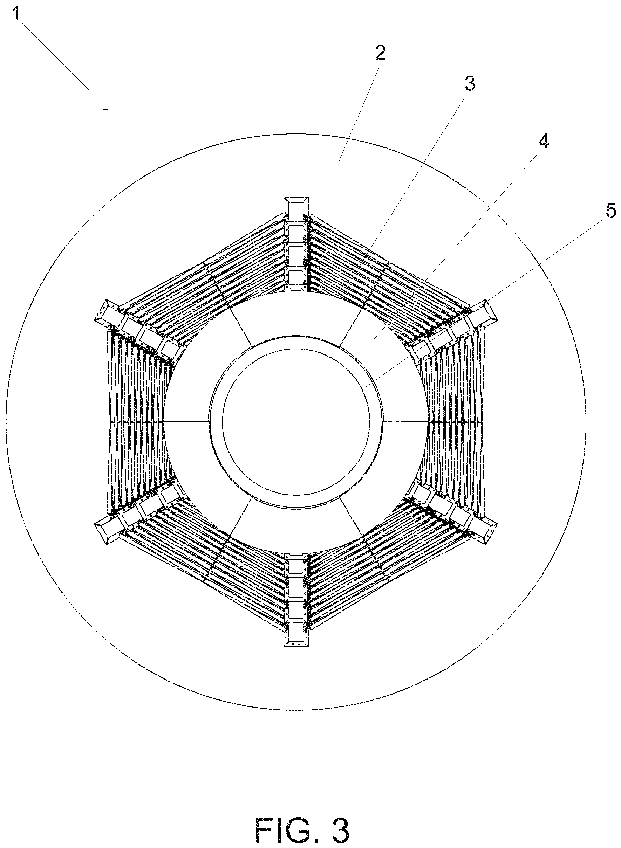

Figure 3 provides a top view of the tower structure 1 of figure 1 without stay cables 6, showing the tower base 2, the lower portion 3, the adapter construction 4, and the upper portion 5.

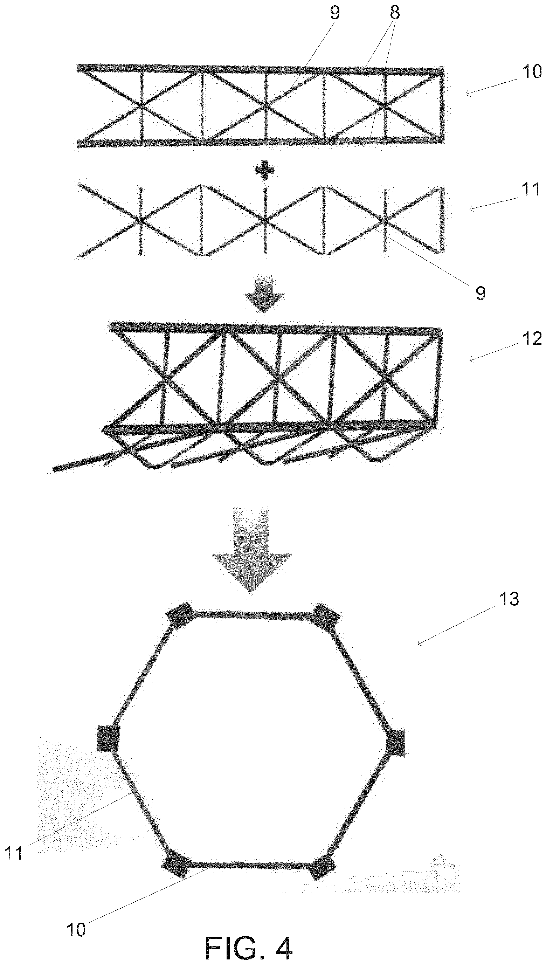

Figure 4 shows schematically the steps of a method according to the invention for forming a lattice section in building and erecting a tower structure according to the invention.

In this embodiment of a method according to the invention, two different kinds of prefabricated level lattice modules 10, 11 are produced and transported to the building site of the tower structure. The first prefabricated module 10 comprises two corner beams 8 connected with a lattice structure 9, and the another prefabricated module 11 consist of a lattice structure 9.

The two prefabricated lattice modules 10, 11 are connected when both of the modules 10, 11 are lengthwise in horizontal orientation by connecting the lattice module 11 formed only by the lattice structure 9 to one of the corner beams 8 of the first lattice module 10 in an angle, as can be seen from figure 4. Three of these types of pairs 12 of lattice modules 10, 11 are made for forming one lattice section in this embodiment.

Then the pairs 12 of the lattice modules 10, 11 are lifted lengthwise in vertical orientation and connected to each other to form a closed angular lattice section 13 of a lower portion of the tower structure.

These lattice sections 13 are then piled and fixed one on top another on a tower base to form the lower portion of the tower structure, on top of the lower portion is lifted and fixed an adapter construction, brace wires are connected to the adapter construction, and an upper portion is lifted and fixed on top of the adapter construction in order to build or erect a tower structure in accordance with the invention.

The specific exemplifying embodiments of the invention shown in figures and discussed above should not be construed as limiting. A person skilled in the art can amend and modify the exemplary tower structure and method described above many evident ways within scope of the attached claims. Thus the invention is not limited merely to the embodiments described above.

## Claims

1. A hybrid tower structure (1) comprising a lower portion (3) in form of a lattice structure (8, 9), an upper portion (5) with continuous outer surface, an adapter construction (4) between the lower and upper portions, and the lower portion (3) of the tower structure has a hollow cross-section through its length where the load bearing lattice structure (8, 9) extends only on the circumference of the cross section and is formed from hollow steel profiles, **characterized in that** the tower structure (1) further comprises plurality of stay cables (6) connected to the tower structure and equipped with means for adjusting the tension of the cables for obtaining specific frequencies for the tower structure and that the lower portion (3) of the tower structure (1) is formed from pre-fabricated lattice sections (10, 11).

2. A tower structure (1) according to claim 1, wherein the hollow steel profiles of the lattice structure (8, 9) are made from corrosion-resistant steel.

3. A tower structure (1) according to claim 1 or 2, wherein the stay cables (6) are detachably attached to the tower structure (1), and preferable to the adapter construction (4) of the tower structure.

4. A tower structure (1) according to any of claims 1-3, wherein the upper portion (5) of the tower structure (1) is made of steel and is in a form of a hollow truncated cone.

5. A tower structure (1) according to any of claims 1-4, wherein the cross section of the lower portion (3) of the tower structure (1) comprises 3 or more corners, and in each of the corners extend substantially vertical corner beam.

6. A tower structure (1) according to any of claims 1-5, wherein the tower structure (1) comprises at least three stay cables (6), each of which have their own fixing base at their exterior ends, which bases are separate from the base (2) of the lower portion (3) of the tower structure, and the tension of each of the stay cable is adjustable.

7. A tower structure (1) according to any of claims 1-6, wherein the tower structure (1) is a tower structure for wind turbine.

8. A method for building a hybrid tower structure (1), in which method a base (2) for the tower structure is formed, on the base is formed and fixed a lattice structure (8, 9) forming a lower portion (3) of the tower structure, on top of the lower portion is lifted and fixed an adapter construction (4), on top of the adapter construction is lifted and fixed an upper portion (5) with continuous outer surface, **characterized in that** the lower portion (3) is formed of prefabricated level lattice modules (10, 11) by connecting the prefabricated level lattice modules in the tower building site to adjacent lattice modules to form a closed angular lattice section (13), which section is then lifted on the base or on top of the previous lattice section and fixed there, and the formation and lifting of the lattice sections are carried out until the predetermined height of the lower portion of the tower structure (1) is reached, and a plurality of stay cables (6) are connected to the tower structure (1) for obtaining specific frequencies for the tower structure.

9. A method according to claim 8, wherein plurality of pairs (12) of connected lattice modules (10, 11) are formed by connecting two adjacent lattice modules to each other in an angle when the lattice modules are lengthwise in horizontal orientation, lifting the pairs of connected lattice modules lengthwise to vertical orientation, and connecting the adjacent pairs of connected lattice modules to form the closed angular lattice section (13).

10. A method according to claim 9, wherein the closed angular lattice section (13) is formed from three pairs (12) of connected lattice modules (10, 11).

11. A method according to any of claims 8-10, wherein plurality of stay cables (6) are connected from one end detachably to the tower structure (1), preferable to the adapter construction (4), and from other end to separate fixing bases, and the tension of the stay cables is adjusted.

12. A method according to any of claims 8-11, wherein the prefabricated lattice modules (10, 11) are connected to adjacent lattice modules through bolted joints or with other suitable detachable connections.

## Patentansprüche

1. Hybridturmstruktur (1), die einen unteren Abschnitt (3) in Form einer Gitterstruktur (8, 9), einen oberen Abschnitt (5) mit durchgehender äußerer Oberfläche, eine Adapterkonstruktion (4) zwischen dem unteren und oberen Abschnitt umfasst, wobei der untere Abschnitt (3) der Turmstruktur einen hohlen Querschnitt durch seine Länge aufweist, wobei die lasttragende Gitterstruktur (8, 9) sich nur auf dem Umfang des Querschnitts erstreckt und aus hohlen Stahlprofilen ausgebildet ist, **dadurch gekennzeichnet, dass** die Turmstruktur (1) ferner zum Erhalten spezifischer Frequenzen für die Turmstruktur mehrere Schrägseile (6) umfasst, die mit der Turmstruktur verbunden und mit Mitteln zum Einstellen der Spannung der Kabel ausgestattet sind, und dass der untere Abschnitt (3) der Turmstruktur (1) aus vorgefertigten Gitterstücken (10, 11) ausgebildet ist.

2. Turmstruktur (1) nach Anspruch 1, wobei die hohlen Stahlprofile der Gitterstruktur (8, 9) aus korrosionsbeständigem Stahl hergestellt sind.

3. Turmstruktur (1) nach Anspruch 1 oder 2, wobei die Schrägseile (6) lösbar an der Turmstruktur (1), vorzugsweise an der Adapterkonstruktion (4) der Turmstruktur, befestigt sind.

4. Turmstruktur (1) nach einem der Ansprüche 1 - 3, wobei der obere Abschnitt (5) der Turmstruktur (1) aus Stahl hergestellt ist und eine Form eines hohlen Kegelstumpfes aufweist.

5. Turmstruktur (1) nach einem der Ansprüche 1 - 4, wobei der Querschnitt des unteren Abschnitts (3) der Turmstruktur (1) 3 oder mehr Ecken umfasst und sich in jeder der Ecken ein im Wesentlichen vertikaler Eckträger erstreckt.

6. Turmstruktur (1) nach einem der Ansprüche 1 - 5, wobei die Turmstruktur (1) mindestens drei Schrägseile (6) umfasst, die an ihren äußeren Enden jeweils ihre eigene Befestigungsbasis aufweisen, wobei die Basen von der Basis (2) des unteren Abschnitts (3) der Turmstruktur getrennt sind und die Spannung jedes der Schrägseile einstellbar ist.

7. Turmstruktur (1) nach einem der Ansprüche 1 - 6, wobei die Turmstruktur (1) eine Turmstruktur für eine Windkraftanlage ist.

8. Verfahren zum Bauen einer Hybridturmstruktur (1), wobei bei dem Verfahren eine Basis (2) für die Turmstruktur ausgebildet wird, auf der Basis eine Gitterstruktur (8, 9) ausgebildet und befestigt wird, die einen unteren Abschnitt (3) der Turmstruktur ausbildet, auf den/dem unteren Abschnitt eine Adapterkonstruktion (4) gehoben und befestigt wird, auf die/der Adapterkonstruktion ein oberer Abschnitt (5) mit durchgehender äußerer Oberfläche gehoben und befestigt wird, **dadurch gekennzeichnet, dass** der untere Abschnitt (3) aus vorgefertigten planen Gittermodulen (10, 11) ausgebildet wird, indem die vorgefertigten planen Gittermodule auf der Turmbaustelle mit benachbarten Gittermodulen verbunden werden, um ein geschlossenes winkliges Gitterstück (13) auszubilden, wobei das Stück dann auf die Basis oder auf das vorherige Gitterstück gehoben und dort befestigt wird, und die Ausbildung und das Heben der Gitterstücke durchgeführt werden, bis die vorgegebene Höhe des unteren Abschnitts der Turmstruktur (1) erreicht ist, und zum Erhalten spezifischer Frequenzen für die Turmstruktur mehrere Schrägseile (6) mit der Turmstruktur (1) verbunden werden.

9. Verfahren nach Anspruch 8, wobei mehrere Paare (12) verbundener Gittermodule (10, 11) ausgebildet werden, indem zwei benachbarte Gittermodule miteinander in einem Winkel verbunden werden, wenn die Gittermodule sich in Längsrichtung in einer horizontalen Ausrichtung befinden, die Paare verbundener Gittermodule in Längsrichtung in eine vertikale Ausrichtung angehoben werden und die benachbarten Paare verbundener Gittermodule verbunden werden, um das geschlossene winklige Gitterstück (13) auszubilden.

10. Verfahren nach Anspruch 9, wobei das geschlossene winklige Gitterstück (13) aus drei Paaren (12) verbundener Gittermodule (10, 11) ausgebildet wird.

11. Verfahren nach einem der Ansprüche 8 - 10, wobei mehrere Schrägseile (6) von einem Ende aus lösbar mit der Turmstruktur (1), vorzugsweise mit der Adapterkonstruktion (4), und vom anderen Ende aus mit getrennten Befestigungsbasen verbunden werden und die Spannung der Schrägseile eingestellt wird.

12. Verfahren nach einem der Ansprüche 8 - 11, wobei die vorgefertigten Gittermodule (10, 11) mit benachbarten Gittermodulen über Bolzenverbindungen oder mit anderen geeigneten lösbaren Verbindungen verbunden werden.

## Revendications

1. Structure de tour hybride (1) comprenant une partie inférieure (3) en forme d'une structure réticulaire (8, 9), une partie supérieure (5) avec une surface externe continue, une construction d'adaptateur (4) entre les parties inférieure et supérieure, et la partie inférieure (3) de la structure de tour possède une section transversale creuse dans sa longueur où la structure réticulaire portante (8, 9) s'étend seulement sur la circonférence de la section transversale et est formée à partir de profils en acier creux, **caractérisée en ce que** la structure de tour (1) comprend en outre une pluralité de haubans (6) raccordée à la structure de tour et équipée de moyens pour ajuster la tension des câbles afin d'obtenir des fréquences spécifiques pour la structure de tour et **en ce que** la partie inférieure (3) de la structure de tour (1) est formée à partir de sections réticulaires préfabriquées (10, 11).

2. Structure de tour (1) selon la revendication 1, dans laquelle les profils en acier creux de la structure réticulaire (8, 9) sont fabriqués à partir d'acier résistant à la corrosion.

3. Structure de tour (1) selon la revendication 1 ou 2, dans laquelle les haubans (6) sont attachés de manière détachable à la structure de tour (1), et de préférence à la construction d'adaptateur (4) de la structure de tour.

4. Structure de tour (1) selon l'une quelconque des revendications 1 - 3, dans laquelle la partie supérieure (5) de la structure de tour (1) est faite d'acier et est de forme d'un cône tronqué creux.

5. Structure de tour (1) selon l'une quelconque des revendications 1 - 4, dans laquelle la section transversale de la partie inférieure (3) de la structure de tour (1) comprend 3 coins ou plus, et dans chacun des coins s'étend une poutre d'angle essentiellement verticale.

6. Structure de tour (1) selon l'une quelconque des revendications 1 - 5, dans laquelle la structure de tour (1) comprend au moins trois haubans (6), chacun desquels possède leur propre embase de fixation au niveau de leurs extrémités extérieures, les embases étant séparées de la base (2) de la partie inférieure (3) de la structure de tour, et la tension de chacun des haubans peut être ajustée.

7. Structure de tour (1) selon l'une quelconque des revendications 1 - 6, dans laquelle la structure de tour (1) est une structure de tour pour turbine éolienne.

8. Procédé de construction d'une structure de tour hybride (1), dans lequel procédé une base (2) pour la structure de tour est formé, sur la base est formée et fixée une structure réticulaire (8, 9) formant une partie inférieure (3) de la structure de tour, sur le dessus de la partie inférieure vient s'élever et est fixée une construction d'adaptateur (4), sur le dessus de la construction d'adaptateur vient s'élever et est fixée une partie supérieure (5) avec une surface externe continue, **caractérisé en ce que** la partie inférieure (3) est formée de modules réticulaires de niveaux préfabriqués (10, 11) en raccordant les modules réticulaires de niveaux préfabriqués dans le site de construction de tour aux modules réticulaires adjacents pour former une section réticulaire angulaire fermée (13), laquelle section est ensuite élevée sur la base ou sur le dessus de la section réticulaire précédente et vient s'y fixer, et la formation et l'élévation des sections réticulaires sont effectuées jusqu'à ce que la hauteur prédéterminée de la partie inférieure de la structure de tour (1) soit atteinte, et une pluralité de haubans (6) est raccordée à la structure de tour (1) pour obtenir des fréquences spécifiques pour la structure de tour.

9. Procédé selon la revendication 8, dans lequel une pluralité de paires (12) de modules réticulaires raccordés (10, 11) est formée en raccordant des modules réticulaires adjacents l'un à l'autre en formant un angle lorsque les modules réticulaires sont dans le sens de la longueur dans une orientation horizontale, en élevant les paires de modules réticulaires raccordés dans le sens de la longueur dans une orientation verticale, et en raccordant les paires adjacentes de modules réticulaires raccordés pour former la section réticulaire angulaire fermée (13).

10. Procédé selon la revendication 9, dans lequel la section réticulaire angulaire fermée (13) est formée à partir de trois paires (12) de modules réticulaires raccordés (10, 11).

11. Procédé selon l'une quelconque des revendications 8 - 10, dans lequel une pluralité de haubans (6) est raccordée à partir d'une extrémité de manière détachable à la structure de tour (1), de préférence à la construction d'adaptateur (4), et à partir d'une autre extrémité pour séparer les embases de fixation, et la tension des haubans est ajustée.

12. Procédé selon l'une quelconque des revendications 8 - 11, dans lequel les modules réticulaires préfabriqués (10, 11) sont raccordés aux modules réticulaires adjacents par des raccords boulonnés ou avec d'autres connexions amovibles adaptées.
